# EUROPÄISCHE PATENTANMELDUNG

(11) **EP 2 372 618 A1**
(43) Veröffentlichungstag der Anmeldung: **05.10.2011**
(21) Anmeldenummer: 10003442.0
(22) Anmeldetag: 30.03.2010
(51) Int. Cl.: G06Q 10/00, G06Q 30/00

(54) **Verfahren und Vorrichtung zur Regelung der Wartezeit von Taxis bis zur Fahrgastaufnahme**

(71) Anmelder: Hochtief AirPort GmbH, 45133 Essen (DE)
(72) Erfinder: Lingelbach, Frank, 45133 Essen (DE)
(74) Vertreter: Rohmann, Michael

(57) **Zusammenfassung**

Verfahren zur Regelung der Wartezeit von Taxis bis zur Fahrgastaufnahme, wobei zumindest einem Taxi gegen Zahlung einer Prioritätsgebühr eine erste Priorität zugeordnet wird. Zumindest einem Taxi wird kostenlos oder gegen Zahlung einer gegenüber der Prioritätsgebühr geringeren Gebühr eine zweite Priorität zugeordnet. Zumindest einem weiteren Taxi mit einer ersten Priorität wird eine geringere Wartezeit bis zur Fahrgastaufnahme zugewiesen, als zumindest einem Taxi mit einer zweiten Priorität.

## Beschreibung

### Beschreibung:

Die Erfindung betrifft ein Verfahren zur Regelung der Wartezeit von Taxis bis zur Fahrgastaufnahme. Die Erfindung betrifft fernerhin eine Vorrichtung zur Durchführung dieses Verfahrens.

Aus der Praxis sind insbesondere an Flughäfen oder Bahnhöfen so genannte Taxispeicher bekannt, in denen eine Mehrzahl bzw. eine Vielzahl von Taxis auf eine Fahrgastaufnahme warten. Die Fahrgastaufnahme erfolgt in der Regel der Reihe nach und ein hinten im Taxispeicher bzw. ein hinten in der Schlange des Taxispeichers stehendes Taxi muss häufig mehrere Stunden bis zu einer Fahrgastaufnahme warten. Nichtsdestoweniger nehmen Taxis bzw. die zugehörigen Taxifahrer diese Wartezeiten in Kauf, da der zu erwartende Fahrterlös häufig relativ hoch ist.

Demgegenüber liegt der Erfindung das technische Problem zugrunde ein Verfahren der eingangs genannten Art anzugeben, mit dem die Wartezeiten von Taxis in Taxispeichem effektiv geregelt werden können. Der Erfindung liegt weiterhin das technische Problem zugrunde eine Vorrichtung zur Durchführung eines solchen Verfahrens anzugeben.

Zur Lösung des technischen Problems lehrt die Erfindung zunächst ein Verfahren zur Regelung der Wartezeit von Taxis bis zur Fahrgastaufnahme, wobei zumindest einem Taxi gegen Zahlung einer Prioritätsgebühr eine erste Priorität zugeordnet wird, wobei zumindest einem weiteren Taxi kostenlos oder gegen Zahlung einer gegenüber der Prioritätsgebühr geringeren Gebühr eine zweite Priorität zugeordnet wird und wobei zumindest einem Taxi mit einer ersten Priorität eine geringere Wartezeit bis zur Fahrgastaufnahme zugewiesen wird, als zumindest einem Taxi mit einer zweiten Priorität. - Ein Taxi mit erster Priorität hat also bis zur Zulassung zur Fahrgastaufnahme eine geringere Wartezeit als ein zur gleichen Zeit ankommendes bzw. etwa zur gleichen Zeit ankommendes Taxi mit zweiter Priorität. Durch Entrichtung der Prioritätsgebühr kann also eine lange Wartezeit vermieden werden und relativ zügig zumindest ein Fahrgast aufgenommen werden. - Zweckmäßigerweise ist eine Mehrzahl von Taxis mit erster Priorität und eine Mehrzahl von Taxis mit zweiter Priorität vorhanden. Vorzugsweise ist die Anzahl der Taxis mit zweiter Priorität höher als die Anzahl der Taxis mit erster Priorität.

Grundsätzlich liegt es im Rahmen der Erfindung, dass die Prioritätsgebühr eine festgelegte bzw. fixe Gebühr ist. Nach besonders bevorzugter Ausführungsform der Erfindung ist die Prioritätsgebühr jedoch variabel. Sie wird zweckmäßiger weise in Abhängigkeit von der aktuell vorliegenden Anzahl der Taxis mit einer ersten Priorität und in Abhängigkeit von der aktuell vorliegenden Anzahl der Taxis mit einer zweiten Priorität berechnet. Diese Zahlen korrelieren mit den zu erwartenden Wartezeiterspamis. Je höher die Anzahl der Taxis mit einer zweiten Priorität ist und/oder je geringer die Anzahl der Taxis mit einer ersten Priorität ist, desto höher ist vorzugsweise die Prioritätsgebühr. Umgekehrt ist die Prioritätsgebühr bevorzugt um so geringer, je geringer die Anzahl der Taxis mit einer zweiten Priorität ist und/oder je höher die Anzahl der Taxis mit einer ersten Priorität ist. Wie weiter unten noch dargelegt, erfolgt die Zählung der Taxis mit einer ersten und einer zweiten Priorität zweckmäßigerweise mittels einer Zählvorrichtung. Empfohlenermaßen wird die Prioritätsgebühr in Abhängigkeit von der Anzahl der Taxis mit einer ersten bzw. einer zweiten Priorität mit einem Rechner berechnet. Die Prioritätsgebühr ist bevorzugt abhängig von der Wartezeitersparnis, die durch Kauf der ersten Priorität erreicht wird. - Es liegt im Rahmen der Erfindung, dass die Prioritätsgebühr bzw. die Höhe der Prioritätsgebühr eine Steuerungsfunktion ausübt. Die Höhe der Prioritätsgebühr beeinflusst die Entscheidung des Taxifahrers welche Priorität er wählt. Bei relativ hoher Prioritätsgebühr wird er die zweite - vorzugsweise kostenlose - Priorität wählen. Bei niedrigerer Prioritätsgebühr wird er wahrscheinlich die erste Priorität wählen. Mittels dieser Steuerungsfunktion in Abhängigkeit von der Höhe der Prioritätsgebühr kann die Anzahl der Taxis mit erster Priorität auf einem gewünschten niedrigeren Niveau gehalten werden.

Gemäß einer Ausführungsvariante der Erfindung werden alternierend Taxis mit einer ersten Priorität und Taxis mit einer zweiten Priorität zur Fahrgastaufnahme zugelassen. So kann insbesondere zunächst ein Taxi mit einer ersten Priorität zugelassen werden, dann ein Taxi mit einer zweiten Priorität und anschließend wieder ein Taxi mit einer ersten Priorität usw.. Es kann aber beispielsweise auch zunächst ein Taxi mit einer ersten Priorität zugelassen werden, dann zwei Taxis mit einer zweiten Priorität nacheinander zugelassen werden und dann wieder ein Taxi mit einer ersten Priorität zugelassen werden usw.. Zweckmäßigerweise ist bei der alternierenden Zulassung der Taxis die Anzahl der vorhandenen Taxis mit zweiter Priorität größer bzw. wesentlich größer, als die Anzahl der vorhandenen Taxis mit erster Priorität.

Nach sehr bevorzugter Ausführungsform der Erfindung werden die Taxis mit der ersten Priorität in zumindest einem Prioritätsspeicher aufgenommen und die Taxis mit der zweiten Priorität werden in zumindest einem allgemeinen Speicher aufgenommen. Speicher bzw. Prioritätsspeicher meint hier und nachfolgend insbesondere eine Verkehrsfläche zum Abstellen der Taxis, beispielsweise einen Parkplatz. Gemäß einer Ausführungsvariante ist lediglich ein Prioritätsspeicher für die Taxis mit der ersten Priorität und ist lediglich ein allgemeiner Speicher für die Taxis mit der zweiten Priorität vorgesehen. Der allgemeine Speicher ist nach besonders bevorzugter Ausführungsform der Erfindung kostenfrei benutzbar. Es liegt aber grundsätzlich auch im Rahmen der Erfindung, dass für die Benutzung des allgemeinen Speichers eine Gebühr erhoben wird, die jedoch dann geringer ist, als die Prioritätsgebühr. Prinzipiell können mehrere allgemeine Speicher und/oder mehrere Prioritätsspeicher vorgesehen sein. Bei einer Ausführungsform mit mehreren Prioritätsspeichem werden vorzugsweise unterschiedliche Prioritätsgebühren für die einzelnen Prioritätsspeicher erhoben. Zweckmäßigerweise wird für den Prioritätsspeicher mit der geringsten Wartezeit die höchste Prioritätsgebühr gezahlt und für den Prioritätsspeicher mit der längsten Wartezeit die geringste Prioritätsgebühr gezahlt.

Es liegt im Rahmen der Erfindung, dass die Zulassung der Taxis zur Fahrgastaufnahme mit der Maßgabe geregelt wird, dass die Anzahl der Taxis mit der zweiten Priorität höher bzw. stets höher bzw. deutlich höher ist, als die Anzahl der Taxis mit der ersten Priorität. Die Anzahl der Taxis wird vorzugsweise mit zumindest einer Zählvorrichtung ermittelt und die Steuerung und/oder Regelung der Zulassung der Taxen erfolgt zweckmäßigerweise mit einem Rechner in Abhängigkeit von der Anzahl der Taxis mit der ersten bzw. mit der zweiten Priorität.

Gegenstand der Erfindung ist auch eine Vorrichtung zur Regelung der Wartezeit von Taxis bis zur Fahrgastaufnahme, wobei ein Prioritätsspeicher zur Aufnahme der Taxis mit einer ersten Priorität vorgesehen ist, wobei ein allgemeiner Speicher zur Aufnahme der Taxis mit einer zweiten Priorität vorhanden ist, wobei fernerhin eine Auswahleinrichtung zur Auswahl der ersten oder der zweiten Priorität vorgesehen ist und wobei die Auswahleinrichtung eine Gebührenentrichtungsvorrichtung für die Entrichtung der Prioritätsgebühr aufweist. Bei dem allgemeinen Speicher handelt es sich zweckmäßigerweise um einen kostenfrei von den Taxis benutzbaren Speicher und bei dem Prioritätsspeicher handelt es sich um einen gegen Entrichtung der Prioritätsgebühr von den Taxis benutzbaren Speicher.

Zweckmäßigerweise ist die erfindungsgemäße Vorrichtung mit zumindest einer Zählvorrichtung zum Zählen der Taxis mit der ersten Priorität und/oder zum Zählen der Taxis mit der zweiten Priorität ausgestattet. Vorzugsweise ist ein Rechner vorhanden, mit dem die variable Prioritätsgebühr in Abhängigkeit von der Anzahl der Taxis mit der ersten Priorität und/oder in Abhängigkeit von der Anzahl der Taxis mit der zweiten Priorität berechnet wird. Die Berechnung der Prioritätsgebühr erfolgt dabei bevorzugt mit der Maßgabe, dass die Prioritätsgebühr um so höher ist, je geringer die Anzahl der Taxis mit der ersten Priorität ist und/oder je höher die Anzahl der Taxis mit der zweiten Priorität ist. Empfohlenermaßen weist die erfindungsgemäße Vorrichtung eine Anzeigevorrichtung für die Prioritätsgebühr auf, die zweckmäßigerweise an der Auswahleinrichtung angeordnet ist. Die Höhe der Pioritätsgebühr ist ein Kriterium für den Taxifahrer zur Auswahl des Prioritätsspeichers oder des allgemeinen Speichers. Ein weiteres Kriterium ist die nachfolgend noch behandelte Schätzung der Wartezeiterspamis durch Benutzung des Prioritätsspeichers.

Es liegt im Rahmen der Erfindung, dass mit dem Rechner die Wartezeit im Prioritätsspeicher in Abhängigkeit von der Anzahl der aktuell im Prioritätsspeicher wartenden Taxis abschätzbar ist und an einer Anzeigevorrichtung anzeigbar ist. Es liegt weiterhin im Rahmen der Erfindung, dass mit dem Rechner die Wartezeiterspamis bei Benutzung des Prioritätsspeichers in Abhängigkeit von der Anzahl der Taxis mit erster und zweiter Priorität abschätzbar ist und an der Anzeigevorrichtung anzeigbar ist, Grundsätzlich können in die Berechung der Wartezeiterspamis bei Benutzung des Prioritätsspeichers weitere Daten einfließen. Dabei handelt es sich insbesondere um die Anzahl der erwarteten Reisenden, insbesondere um die Anzahl der erwarteten Fluggäste auf Flughäfen mit der der Bedarf an Taxifahrten abgeschätzt werden kann. Die genannten Daten können sich insbesondere auch auf aktuelle Veranstaltungen wie Messen oder Sportereignisse beziehen, die die Taxinachfrage bzw. das Taxiangebot beeinflussen. In die Daten können auch Wetterdaten einfließen, die die Entscheidung von Reisenden bzw. Fahrgästen bezüglich der Benutzung von Taxis beeinflussen.

Es liegt im Rahmen der Erfindung, dass den Nutzern des Prioritätsspeichers und/oder den Nutzern der allgemeinen Speicher Zusatzdienstleistungen angeboten werden. Eine Zusatzdienstleistung für Nutzer des Prioritätsspeichers kann in der Garantie der angezeigten Wartezeiterspamis liegen. Eine weitere Zusatzdienstleistung kann sich auf unerwünschte und nicht besonders lukrative Kurzfahrten der Taxis beziehen. Wenn ein Taxi nach Benutzung des Prioritätsspeichers lediglich eine Kurzfahrt erhält, kann es gemäß dieser Ausführungsform innerhalb einer bestimmten bzw. festzulegenden Zeitspanne den Prioritätsspeicher erneut benutzen und zwar kostenlos oder gegen eine geringere Gebühr als die normalerweise zu zahlende Prioritätsgebühr. Insoweit kann die Erfindung gleichsam eine Kur-zfahrtversicherung bereitstellen.

Empfohlenermaßen weist der Prioritätsspeicher eine Zufahrtsbeschränkungseinrichtung auf und nach Entrichtung der Prioritätsgebühr ist die Zufahrt zum Prioritätsspeicher mit dieser Zufahrtsbeschränkungseinrichtung freigebbar. Zweckmäßigerweise handelt es sich bei der Zufahrtsbeschränkungseinrichtung um zumindest eine Schranke und/oder zumindest eine Ampel. Zweckmäßigerweise wird die Zufahrt zum Prioritätsspeicher bzw. die Betätigung der Zufahrtsbeschränkungseinrichtung über den Rechner gesteuert. Gemäß bevorzugter Ausführungsform weist der Prioritätsspeicher eine Zufahrtsbeschränkungseinrichtung und eine Identifizierungseinrichtung auf und nach Identifizierung eines Taxis mit der Identifizierungseinrichtung ist die Zufahrt zum Prioritätsspeicher mit der Zufahrtsbeschränkungseinrichtung freigebbar. Die Identifizierung eines Taxis mit der Identifizierungseinrichtung erfolgt zweckmäßigerweise anhand des Kennzeichens des Taxis und/oder beispielsweise anhand eines in dem Taxi bzw. an dem Taxi angeordneten Senders. Die Identifizierung mit der Identifizierungseinrichtung und die Freigabe der Zufahrt mit der Zufahrtsbeschränkungseinrichtung wird vorzugsweise über den Rechner gesteuert. Die Ausführungsvariante mit der Identifizierung eines Taxis mittels der Identifizierungseinrichtung eignet sich insbesondere für die vorgenannte Kurzfahrtversicherung, wenn ein Taxi nach einer Kurzfahrt identifiziert wird und den Prioritätsspeicher kostenfrei oder gegen geringere Gebühr erneut benutzen kann.

Die oben beschriebene Auswahleinrichtung zur Auswahl der ersten oder der zweiten Priorität ist in einem Entscheidungsbereich angeordnet. Gemäß bevorzugter Ausführungsform weist dieser Entscheidungsbereich eine Identifizierungseinrichtung auf, mit der ein Taxi im Entscheidungsbereich identifiziert werden kann. Auf diese Weise kann dem Taxi bzw. dem entsprechenden Taxifahrer eine personalisierte Prioritätsgebühr angeboten werden. Dabei kann es sich beispielsweise um eine ermäßigte Prioritätsgebühr nach Anwendung eines vereinbarten Mengenrabatts handeln.

Es empfiehlt sich, dass der Prioritätsspeicher eine Ausfahrtsbeschränkungseinrichtung aufweist und dass die Ausfahrt aus dem Prioritätsspeicher mit der Ausfahrtsbeschränkungseinrichtung freigebbar ist. Empfohlenermaßen weist der Prioritätsspeicher eine Ausfahrtsbeschränkungseinrichtung und eine Identifizierungseinrichtung auf und nach Identifizierung eines Taxis mit der Identifizierungseinrichtung ist die Ausfahrt aus dem Prioritätsspeicher mit der Ausfahrtsbeschränkungseinrichtung freigebbar. Zweckmäßigerweise wird die Ausfahrtsbeschränkungseinrichtung und/oder die Identifizierungseinrichtung mit dem Rechner gesteuert bzw. geregelt.

Es liegt im Rahmen der Erfindung, dass die Anzahl der Taxis im Prioritätsspeicher möglichst gering gewählt wird, um eine hohe Wartezeiterspamis gegenüber dem allgemeinen - vorzugsweise kostenlosen - Speicher zu gewährleisten. Andererseits ist es zweckmäßig, dass immer eine Mehrzahl von Taxis im Prioritätsspeicher wartet, damit insbesondere bei erhöhter Taxinachfrage auch immer ein Fahrzeug aus dem Prioritätsspeicher zur Verfügung gestellt werden kann. Gemäß besonders bevorzugter Ausführungsform wird die Anzahl der Taxis im Prioritätsspeicher über die Höhe der Prioritätsgebühr geregelt. Je höher die Anzahl der Taxis im Prioritätsspeicher ist, desto höher ist die Prioritätsgebühr, um die Attraktivität des Prioritätsspeichers gegenüber dem allgemeinen Speicher zu senken. Dementsprechend sinkt die Prioritätsgebühr mit sinkender Anzahl der Taxis im Prioritätsspeicher, um dessen Attraktivität zu erhöhen. Zusätzlich oder anstelle dessen kann die Anzahl der Taxis im Prioritätsspeicher über die Ausfahrt von Taxis aus den Speichern geregelt werden. Gemäß einer Ausführungsform der Erfindung wird die Ausfahrt von Taxis aus dem Prioritätsspeicher so lange zugelassen, bis ein unterer Grenzwert für die Anzahl der im Prioritätsspeicher wartenden Taxis erreicht wird. Zweckmäßigerweise fahren während dieser Ausfahrten der Taxis aus dem Prioritätsspeicher keine Taxis aus dem allgemeinen Speicher aus. Der untere Grenzwert kann beispielsweise lediglich ein einziges im Prioritätsspeicher wartendes Taxi sein oder aber auch zwei, drei oder mehr im Prioritätsspeicher wartenden Taxis,

Der Erfindung liegt die Erkenntnis zugrunde, dass mit dem erfindungsgemäßen Verfahren bzw. mit der erfindungsgemäßen Vorrichtung die Wartezeit für Taxis an Flughäfen und dergleichen effektiv geregelt werden kann. Für Nutzer des Prioritätsspeichers verkürzt sich die Wartezeit beträchtlich. Das wird im Rahmen der Erfindung mit relativ einfachen und wenig aufwendigen Maßnahmen erreicht. Ohne das erfindungsgemäße Verfahren bzw. ohne die erfindungsgemäße Vorrichtung haben Taxifahrer nur die Option lange zu warten, wenn sie Fahrgäste z.B. am Flughafen aufnehmen möchten. Bei Durchführung des erfindungsgemäßen Verfahrens bzw. bei Nutzung der erfindungsgemäßen Vorrichtung wird für Taxifahrer effektiv eine neue Wahlmöglichkeit geschaffen, gegen Entrichtung der Prioritätsgebühr eine beträchtliche Wartezeiterspamis zu erzielen. Möchten die Taxifahrer diese neue Möglichkeit nicht nutzen, können sie wie bisher im allgemeinen - bevorzugt kostenlosen - Speicher auf die Zulassung zur Fahrgastaufnahme warten. Die zahlenden Nutzer des Prioritätsspeichers erhalten mit der Wartezeiterspamis einen greifbaren Gegenwert und können nach deutlich kürzerer - im idealisierten Fall ohne- Wartezeit einen Fahrgast aufnehmen. Da die zahlenden Nutzer des Prioritätsspeichers in der Regel höhere Opportunitätskosten bzw. Wartezeitsensitivitäten haben als die Taxifahrer, die weiterhin den allgemeinen Speicher nutzen, ergeben sich auf diese Weise Wohlfahrtsgewinne.

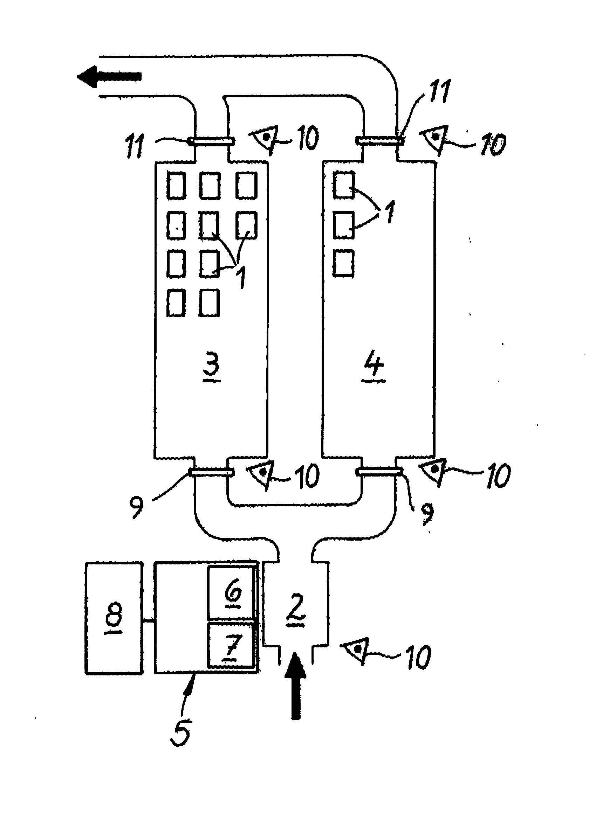

Nachfolgend wird die Erfindung anhand einer lediglich ein Ausführungsbeispiel darstellenden Zeichnung näher erläutert. Die einzige Figur zeigt ein Schema einer Vorrichtung zur Durchführung des erfindungsgemäßen Verfahrens.

Bei der in der Figur dargestellten Vorrichtung zur Regelung der Wartezeit von Taxis 1 bis zur Fahrgastaufnahme mag es sich um eine Vorrichtung an einem Flughafen handeln. Die an dem Flughafen ankommenden und zur Aufnahme von Fahrgästen bereiten Taxis 1 fahren zunächst in einen Entscheidungsbereich 2 ein. Die Vorrichtung weist einen allgemeinen Speicher 3 und einen Prioritätsspeicher 4 für Taxis 1 auf. Im Entscheidungsbereich 2 ist eine Auswahleinrichtung 5 angeordnet, an der ein mit seinem Taxi 1 im Entscheidungsbereich 2 befindlicher Taxifahrer auswählen kann, ob er den kostenfreien allgemeinen Speicher 3 oder den gebührenpflichtigen Prioritätsspeicher 4 benutzen möchte. Wenn er die Benutzung des gebührenpflichtigen Prioritätsspeichers 4 auswählt ist an einer an der Auswahleinrichtung 5 angeordneten Gebührenentrichtungsvorrichtung 6 die Prioritätsgebühr zu entrichten. Zweckmäßigerweise und im Ausführungsbeispiel wird die aktuell zu zahlende Prioritätsgebühr an einer Anzeigevorrichtung 7 der Auswahleinrichtung 5 angezeigt.

Vorzugsweise und im Ausführungsbeispiel ist die Prioritätsgebühr variabel und wird zumindest in Abhängigkeit von der Anzahl der Taxis 1 im allgemeinen Speicher 3 und in Abhängigkeit von der Anzahl der Taxis 1 im Prioritätsspeicher 4 berechnet. Diese Berechnung erfolgt zweckmäßigerweise mittels eines Rechners 8. Vorzugsweise ist eine in der Figur nicht näher dargestellte erste Zählvorrichtung zum Zählen der in den allgemeinen Speicher 3 einfahrenden Taxis und ausfahrenden Taxis 1 vorgesehen, so dass stets die aktuelle Anzahl der im allgemeinen Speicher 3 befindlichen Taxis 1 festgestellt werden kann. Empfohlenermaßen ist weiterhin eine in der Figur nicht näher dargestellte zweite Zählvorrichtung zum Zählen der in den Prioritätsspeicher 4 einfahrenden Taxis 1 und aus dem Prioritätsspeicher 4 ausfahrenden Taxis 1 vorgesehen, so dass stets die aktuelle Anzahl der im Prioritätsspeicher 4 befindlichen Taxis 1 feststellbar ist. Die Prioritätsgebühr ist zweckmäßigerweise um so höher je geringer die Anzahl an Taxis 1 im Prioritätsspeicher 4 ist und je höher die Anzahl von Taxis 1 im allgemeinen Speicher 3 ist. Es liegt im Rahmen der Erfindung, dass die nicht dargestellten Zählvorrichtungen zur Berechnung der Prioritätsgebühr an den Rechner 8 gekoppelt sind.

Gemäß bevorzugter Ausführungsform ist mit dem Rechner 8 die Wartezeit und die Wartezeitersparnis bei Benutzung des Prioritätsspeichers insbesondere in Abhängigkeit von der Anzahl der Taxis 1 mit erster und zweiter Priorität abschätzbar. Zweckmäßigerweise sind Wartezeit und Wartezeitersparnis ebenfalls an der Anzeigevorrichtung 7 anzeigbar. Fernerhin können an der Anzeigevorrichtung 7 auch zu erbringende und/oder optionale Zusatzdienstleistungen wie die Garantie der Wartezeitersparnis und/oder die oben beschriebene Kurzfahrtversicherung angezeigt werden und gegebenenfalls über die Auswahleinrichtung 5 zugewählt werden.

In der Figur ist erkennbar, dass die Zufahrt sowohl zum allgemeinen Speicher 3 als auch zum Prioritätsspeicher 4 durch jeweils eine Zufahrtsbeschränkungseinrichtung 9 eingeschränkt wird. Zweckmäßigerweise ist nach Entrichtung der Prioritätsgebühr an der Gebührenentrichtungsvorrichtung 6 die Zufahrt zum Prioritätsspeicher 4 mit der dort angeordneten Zufahrtsbeschränkungseinrichtung 9 freigebbar. Die Zufahrtsbeschränkungseinrichtungen sind vorzugsweise in Form von Schranken realisiert. Es ist fernerhin erkennbar, dass im Bereich der Zufahrt sowohl zum allgemeinen Speicher 3 als auch zum Prioritätsspeicher 4 eine Identifizierungseinrichtung 10 angeordnet ist. Mit einer solchen Identifizierungseinrichtung 10 kann ein bestimmtes Taxi 1 beispielsweise anhand seines Kennzeichens identifiziert werden. Zweckmäßigerweise ist nach Identifizierung eines bestimmten Taxis 1 mit der Identifizierungseinrichtung 10 die Zufahrt zum Prioritätsspeicher 4 mit der Zufahrtsbeschränkungseinrichtung 9 freigebbar. - Zweckmäßigerweise kann mit einer Identifizierungseinrichtung 10 im Entscheidungsbereich 2 ein am Entscheidungspunkt stehendes Taxi 1 identifiziert und mit dem Rechner 8 mit einem für dieses Taxi 1 hinterlegten Konto verknüpft werden. Auf diese Weise kann der Einzug der fälligen Gebühr automatisch von dem hinterlegten Konto erfolgen.

In der Figur ist weiterhin erkennbar, dass sowohl der allgemeine Speicher 3 als auch der Prioritätsspeicher 4 über eine Ausfahrtsbeschränkungseinrichtung 11 verfügt. Zweckmäßigerweise werden die Ausfahrtsbeschränkungseinrichtungen 11 so gesteuert, dass alternierend Taxis 1 aus dem allgemeinen Speicher 3 und Taxis 1 aus dem Prioritätsspeicher 4 ausfahren können. Beim Vergleich des in der Figur dargestellten allgemeinen Speichers 3 mit dem Prioritätsspeicher 4 ist feststellbar, dass in dem allgemeinen Speicher 3 eine größere Anzahl von Taxis 1 vorhanden ist, als in dem Prioritätsspeicher 4. Folglich ist die Wartezeit der im Prioritätsspeicher 4 befindlichen Taxis 1 bei alternierender Ausfahrt der Taxis 1 geringer bzw. deutlich geringer als die Wartezeit der Taxis 1 in dem allgemeinen Speicher 3. In der Figur ist fernerhin gezeigt, dass an jeder Ausfahrtsbeschränkungseinrichtung 11 eine Identifizierungseinrichtung 10 angeordnet ist. Die Ausfahrt der Taxis 1 kann hier also auch durch Identifikation bestimmter Taxis 1 gesteuert bzw. geregelt werden. Die Ausfahrtsbeschränkungseinrichtungen 11 mögen im Ausführungsbeispiel in Form von Schranken realisiert sein. Es liegt im Rahmen der Erfindung, dass die Steuerung und/oder Regelung der Zufahrtsbeschränkungseinrichtungen 9 und/oder der Identifizierungseinrichtungen 10 und/oder der Ausfahrtsbeschränkungseinrichtungen 11 über den Rechner 8 erfolgt.

## Patentansprüche

1. Verfahren zur Regelung der Wartezeit von Taxis (1) bis zur Fahrgastaufnahme, wobei zumindest einem Taxi (1) gegen Zahlung einer Prioritätsgebühr eine erste Priorität zugeordnet wird, wobei zumindest einem weiteren Taxi (1) kostenlos oder gegen Zahlung einer gegenüber der Prioritätsgebühr geringeren Gebühr eine zweite Priorität zugeordnet sind und wobei zumindest einem Taxi (1) mit einer ersten Priorität eine geringere Wartezeit bis zur Fahrgastaufnahme zugewiesen wird, als zumindest einem Taxi (1) mit einer zweiten Priorität.

2. Verfahren nach Anspruch 1, wobei die Prioritätsgebühr variabel ist und in Abhängigkeit von der Anzahl der Taxis (1) mit einer ersten Priorität und/oder in Abhängigkeit von der Anzahl der Taxis (1) mit einer zweiten Priorität berechnet wird.

3. Verfahren nach einem der Ansprüche 1 oder 2, wobei alternierend zumindest ein Taxi (1) mit einer ersten Priorität und zumindest ein Taxi (1) mit einer zweiten Priorität zur Fahrgastaufnahme zugelassen wird.

4. Verfahren nach einem der Ansprüche 1 bis 3, wobei die Taxis (1) mit der ersten Priorität in zumindest einem Prioritätsspeicher (4) aufgenommen werden und wobei die Taxis (1) mit der zweiten Priorität in zumindest einem allgemeinen Speicher (3) aufgenommen werden.

5. Verfahren nach einem der Ansprüche 1 bis 4, wobei die Zulassung der Taxis (1) zur Fahrgastaufnahme mit der Maßgabe geregelt wird, dass die Anzahl der Taxis (1) mit der zweiten Priorität höher bzw. deutlich höher ist als die Anzahl der Taxis (1) mit der ersten Priorität.

6. Vorrichtung zur Durchführung des Verfahrens nach einem der Ansprüche 1 bis 5, wobei zumindest ein Prioritätsspeicher (4) zur Aufnahme der Taxis (1) mit der ersten Priorität vorgesehen ist, wobei zumindest ein allgemeiner Speicher (3) zur Aufnahme der Taxis (1) mit der zweiten Priorität vorhanden ist, wobei fernerhin eine Auswahleinrichtung (5) zur Auswahl der ersten oder der zweiten Priorität vorgesehen ist und wobei die Auswahleinrichtung (5) eine Gebührenentrichtungsvonichtung (6) für die Entrichtung der Prioritätsgebühr aufweist.

7. Vorrichtung nach Anspruch 6, wobei zumindest eine Zählvorrichtung zum Zählen der Taxis (1) mit der ersten Priorität und/oder zum Zählen der Taxis (1) mit der zweiten Priorität vorgesehen ist und wobei zumindest ein Rechner (8) vorhanden ist, mit dem die variable Prioritätsgebühr in Abhängigkeit von der Anzahl der Taxis (1) mit der ersten Priorität und/oder in Abhängigkeit von der Anzahl der Taxis (1) mit der zweiten Priorität berechenbar ist.

8. Vorrichtung nach Anspruch 7, wobei mit dem Rechner (8) die Wartezeit im Prioritätsspeicher (4) und/oder im allgemeinen Speicher (3) in Abhängigkeit von der Anzahl der Taxis (1) im Prioritätsspeicher (4) und ggf. in Abhängigkeit von der Anzahl der Taxis (1) im allgemeinen Speicher (3) abschätzbar ist und an einer Anzeigevorrichtung (7) anzeigbar ist und/oder wobei mit dem Rechner (8) die Wartezeiterspamis bei Benutzung des Prioritätsspeichers (4) in Abhängigkeit von der Anzahl der Taxis (1) mit erster und zweiter Priorität abschätzbar und an der Anzeigevorrichtung (7) anzeigbar ist.

9. Vorrichtung nach einem der Ansprüche 6 bis 8, wobei der Prioritätsspeicher (4) eine Zufahrtsbeschränkungseinrichtung (9) aufweist und wobei nach Entrichtung der Prioritätsgebühr die Zufahrt zum Prioritätsspeicher (4) mit der Zufahrtsbeschränkungseinrichtung (9) freigebbar ist.

10. Vorrichtung nach einem der Ansprüche 6 bis 9, wobei der Prioritätsspeicher (4) eine Zufahrtsbeschränkungseinrichtung (9) und eine Identifizierungseinrichtung (90) aufweist und wobei nach Identifizierung eines Taxis (1) mit der Identifizierungseinrichtung (10) die Zufahrt zum Prioritätsspeicher (4) mit der Zufahrtsbeschränkungseinrichtung (9) freigebbar ist.

11. Vorrichtung nach einem der Ansprüche 6 bis 10, wobei der Prioritätsspeicher (4) eine Ausfahrfsbeschränkungseinrichtung (11) aufweist und wobei bei entrichteter Prioritätsgebühr die Ausfahrt aus dem Prioritätsspeicher (4) mit der Ausfahrtsbeschränkungseinrichtung (11) freigebbar ist.

12. Vorrichtung nach einem der Ansprüche 6 bis 11, wobei eine alternierende Ausfahrt von Taxis 1 aus dem allgemeinen Speicher 3 und dem Prioritätsspeicher 4 mit Hilfe von Ausfahrtsbeschränkungseinrichtungen (11) an dem allgemeinen Speicher (3) und an dem Prioritätsspeicher (4) steuerbar und/oder regelbar ist.

## Geänderte Patentansprüche

### Geänderte Patentansprüche gemäss Regel 137(2) EPÜ.

**1.** Verfahren zur Regelung der Wartezeit von Taxis (1) bis zur Fahrgastaufnahme, wobei zumindest einem Taxi (1) gegen Zahlung einer Prioritätsgebühr eine erste Priorität zugeordnet wird, wobei zumindest ein Prioritätsspeicher (4) zur Aufnahme der Taxis (1) mit der ersten Priorität vorgesehen wird, wobei zumindest einem weiteren Taxi (1) kostenlos oder gegen Zahlung einer gegenüber der Prioritätsgebühr geringeren Gebühr eine zweite Priorität zugeordnet wird, wobei zumindest ein allgemeiner Speicher (3) zur Aufnahme der Taxis (1) mit der zweiten Priorität vorhanden ist, wobei fernerhin eine Auswahleinrichtung (5) zur Auswahl der ersten oder der zweiten Priorität vorgesehen wird und wobei zumindest einem Taxi (1) mit einer ersten Priorität eine geringere Wartezeit bis zur Fahrgastaufnahme zugewiesen wird, als zumindest einem Taxi (1) mit einer zweiten Priorität.
